# DEMANDE DE BREVET EUROPEEN

(11) **EP 0 875 149 A1**
(43) Date de publication de la demande: **04.11.1998**
(21) Numéro de dépôt: 98401044.7
(22) Date de dépôt: 29.04.1998
(51) Int. Cl.: A21D 8/08, A23D 9/007

(54) **Nouvelles compositions lubrifiantes et dispositif de mise en oeuvre dans des flacons pressurisés**

(30) Priorité: 29.04.1997 FR 9705274
(71) Demandeur: Bial SA, 67802 Bischheim Cedex (FR)
(72) Inventeur: Cornu Thenard, Claude, Boehringer Ingelheim Al. SA, 67802 Bischheim Cedex (FR)
(74) Mandataire: Burtin, Jean-François

(57) **Abrégé**

La présente invention se rapporte au domaine des industries alimentaires et plus particulièrement au domaine de la cuisine, de la boulangerie et de la pâtisserie.

Elle se rapporte à des compositions de lubrification ou de démoulage sous forme d'aérosol caractérisées en ce que l'agent lubrifiant est constitué par une huile et/ou une matière grasse présentant une bonne qualité de pulvérisation, une adhérence suffisante à la paroi des récipients et une viscosité se situant dans une zone favorable et en ce que l'agent propulseur est constitué par du dioxyde de carbone.

Utilisation pour la lubrification des plaques de cuisson, pour le démoulage des produits de cuisson et pour la lubrification des machines de traitement agro-alimentaires.

## Description

La présente invention se rapporte au domaine des industries alimentaires et plus particulièrement au domaine de la cuisine, de la boulangerie et de la pâtisserie.

Elle concerne plus particulièrement des compositions alimentaires utilisées dans la fabrication à l'échelle industrielle ou artisanale, de plats cuisinés, de pâtisserie, de boulangerie ou de biscuiterie pour assurer le facile démoulage et la lubrification des plaques, récipients et moules utilisés dans ces industries ainsi que pour la lubrification des machines de traitement agro-alimentaires, notamment pour les machines diviseuses de pâte et/ou pour les machines trancheuses de pain.

Elle se rapporte spécifiquement à des compositions de lubrification ou de démoulage sous forme d'aérosol et au dispositif de mise en oeuvre dans un flacon pressurisé.

Ces compositions sont formées d'une phase liquidé contenant l'agent lubrifiant et d'une phase gazeuse comportant un agent propulseur. Elles sont caractérisées par le fait que l'agent lubrifiant est constitué par une huile et/ou une matière grasse présentant à la fois une bonne qualité de pulvérisation, une adhérence suffisante à la paroi des récipients ou des moules et une viscosité se situant dans une zone favorisant l'écoulement régulier tout en évitant le risque d'une fluidité trop grande et par le fait que l'agent propulseur est constitué par du dioxyde de carbone.

Plus spécifiquement les compositions de lubrification et de démoulage comportent une huile et/ou une graisse dont la viscosité se situe dans une plage assurant une bonne tenue sur les ustensiles ou les moules.

Selon une autre caractéristique de l'invention la pression de dioxyde de carbone à l'intérieur du dispositif de mise en oeuvre est déterminée de façon à ce que le dioxyde de carbone se dissolve partiellement dans l'huile et/ou la graisse.

Dans l'état de la technique, les compositions de démoulage notamment lorsqu'elles se présentent sous forme liquide, sont conditionnées en bidon ou récipient étanche, et il est nécessaire de les utiliser par application au pinceau, au pistolet ou au chiffon. Il en résulte une application imprécise, peu efficace et peu hygiénique, surtout dans le cadre d'une fabrication alimentaire à l'échelle industrielle ou artisanale. En outre, dans le cas particulier des agents lubrifiants ou de démoulage à base de matières grasses, une application excessive a des répercussions sur l'apport lipidique des aliments, et par conséquent sur leurs caractéristiques diététiques ou organoleptiques. Une application insuffisante compromet le démoulage. Une application excessive laissera un film trop important de matières grasses qui pourra laisser à l'utilisateur une saveur inhabituelle et désagréable et qui compromettra l'aspect du produit.

Afin de faciliter la mise en oeuvre de certaines substances alimentaires, et en particulier l'usage des agents de démoulage dans le secteur de la boulangerie-pâtisserie, on a été amené à conditionner ces substances dans des flacons étanches pour aérosols, dans lesquels la substance en question est un mélange liquide à base d'huile et/ou de cires végétales, et/ou d'un émulsifiant du type lécithine, l'ensemble étant mélangé à un agent propulseur. Ainsi, on a commencé par utiliser à titre d'agent propulseur des hydrocarbures fluorocarbonés, connus sous l'abréviation CFC. Or il s'est avéré que les CFC ont des propriétés néfastes vis-à-vis de l'environnement, et sont en particulier susceptibles de détériorer la couche d'ozone de l'atmosphère terrestre, de contribuer à l'augmentation de l'effet dit « de serre » et à l'augmentation du rayonnement ultraviolet au sol.

L'industrie a pris conscience du fait qu'à moyen terme il était nécessaire de trouver des substituts aux CFC et on a utilisé pour propulser des substances alimentaires, des aérosols dans lesquels l'agent propulseur était constitué d'un mélange inflammable comme le mélange de gaz butane/propane. Si de telles substances facilitent la vaporisation de la substance alimentaire, elles peuvent aussi se révéler dangereuses pour certaines utilisations, du fait de leur caractère très facilement inflammable. En particulier, l'utilisation du gaz butane et/ou propane à titre d'agent propulseur comporte des risques d'inflammation des gaz employés pour former l'aérosol, et on constate de ce fait un problème de sécurité, en particulier lors de l'utilisation intempestive de ces produits à proximité d'une flamme au cours d'une opération de cuisson. Une première solution a donc consisté à utiliser comme gaz propulseur inerte un gaz constitué par l'hydrofluorocarbure dénommé HFC 134A.

Une autre technique décrite dans le brevet britannique 1.449.272 consiste à introduire dans le flacon pour aérosol, ouvert, du dioxyde de carbone solide dans la préparation lipidique, diluée dans un diluant liquide. Dans ce procédé on referme le contenu après quelques secondes par pose de la valve de façon que l'espace de tête du flacon soit occupé par du dioxyde de carbone gazeux pour établir une pression suffisante pour la propulsion.

Ce procédé convient sans doute pour pulvériser des ingrédients alimentaires et en particulier de la crème chantilly sur des préparations et notamment des pâtisseries, mais ne peut avoir un emploi général.

Au vu de ces connaissances antérieures l'invention a pour but de fournir une composition lubrifiante utilisable dans la confection de repas ou de produits alimentaires, présentée sous forme d'aérosol et apte à remédier notamment aux inconvénients décrits ci-dessus.

Plus précisément, l'invention a pour but de proposer une composition lubrifiante présentée sous forme d'aérosol qui rend l'application plus facile et en quantité voulue, mais sans faire appel pour l'agent propulseur, à des substances nocives ou dangereuses pour l'homme ou son environnement.

La solution de ce problème a été trouvée en utilisant comme gaz propulseur du dioxyde de carbone qui est parfaitement inerte et non toxique et qui est susceptible de se dissoudre dans la fraction lipidique et non l'inverse.

Selon les caractéristiques de l'invention la quantité de dioxyde de carbone dissoute dans la fraction lipidique est d'au minimum 3 % de la quantité d'ingrédient liquide et de préférence de 5 à 10 %.

L'autre solution du problème réside dans l'emploi comme agent lubrifiant d'une huile végétale dont la viscosité répond aux normes énoncées ci-après et dont le caractère d'adhésivité fait que la couche mince propulsée sur l'ustensile de cuisson ne s'écoulera pas immédiatement en dégouttant ou ne s'étalera pas avec un délai excessif, quelle que soit la température.

Les compositions lubrifiantes et de moulage selon l'invention peuvent comporter en outre d'autres ingrédients et/ou additifs comme en particulier des agents émulsionnants, des cires, des agents antioxydants, des produits salins ou des agents tampon.

Pour assurer une bonne qualité de pulvérisation et une adhérence suffisante sur la paroi des récipients ou des moules ou des plaques, la composition doit présenter une viscosité minimale de 20 mPa.s à 25°C.

Parmi les huiles végétales utilisées dans les compositions de démoulage selon l'invention on pourra citer l'huile d'arachide, l'huile d'olive, l'huile de toumesol, l'huile de palme, l'huile de soja, l'huile de coco, l'huile de colza, l'huile de pépin de raisins, les monoglycérides à chaine moyenne (MCT) ou des mélanges de celles-ci.

Comme agent émulsionnant on peut se baser sur les émulsionnants autorisés dans l'alimentation et en particulier la lécithine.

Comme cires que l'on pourra incorporer à la composition selon l'invention, on citera des cires naturelles comme la cire d'abeilles, la cire de Camauba ou la cire Montana. On peut utiliser également des cires synthétiques comme les esters d'acides gras et d'alcools gras du type sperma céti.

Comme agent antioxydant on utilisera de préférence des substances phénoliques ou acides qui empêchent ou retardent le rancissement des matières grasses présentes dans la composition. On citera à cet effet l'acide sorbique et ses sels, les esters d'acide ascorbique avec un alcool gras, la vitamine E et les différents tocophérols. En tout état de cause les différents ingrédients de la composition selon l'invention devront être adaptés aux dispositions réglementaires en vigueur.

La présente invention concerne également un procédé de réalisation des compositions de lubrification ou de démoulage selon l'invention qui consiste à soumettre le mélange lipidique préalablement préparé dans le flacon pour aérosol, à une surpression modérée et passagère de dioxyde de carbone qui facilite la dissolution dudit dioxyde de carbone dans le milieu.

La surpression est calculée de telle manière que la pression résiduelle dans le flacon pour aérosol soit conforme à la réglementation des aérosols en vigueur. Ceci impose l'utilisation de récipients monoblocs qui offrent une sécurité complète. Ensuite la valve est posée et sertie la pression est appliquée par la valve et la buse de pulvérisation est mise en place ainsi qu'éventuellement un capot protecteur.

L'invention concerne encore la mise en oeuvre de la composition lubrifiante ou de démoulage dans le domaine de l'industrie alimentaire et plus particulièrement pour assurer le démoulage des préparations de l'industrie de la boulangerie, de la pâtisserie ou de la biscuiterie. Cette mise en oeuvre consiste à appliquer par pulvérisation d'une manière égale et suffisamment importante une pellicule de la composition selon l'invention sur la face des moules, récipients ou ustensiles de cuisine qui est en contact avec la préparation alimentaire.

De cette façon après cuisson, il sera possible de retirer ou de faire s'écouler la préparation alimentaire sans perte de produit ou sans difficulté d'extraction.

Les compositions lubrifiantes ou de démoulage selon l'invention trouveront aussi un usage pour la lubrification des plaques de cuisson, notamment en boulangerie pour la fabrication de pain de mie, de baguettes, de pâtes à tarte, de pâte à pizza, ou pour le démoulage de produits de longue conservation comme les produits de confiserie, les pains d'épices, les cakes, pour le démoulage des produits de cuisson domestiques dans les poêles à frire, les casseroles et les bassines, pour la lubrification des machines de traitement agro-alimentaires comme le matériel de panification.

Les compositions selon l'invention seront pulvérisées sur la surface concernée pendant une à trois secondes de façon à ce qu'une pellicule homogène soit répartie sur toute la surface.

## Revendications

1. Compositions alimentaires assurant le démoulage des plaques de cuisson et la lubrification de celles-ci, formées d'une phase liquide contenant un agent lubrifiant et d'une phase gazeuse contenant un agent propulseur, caractérisées en ce que l'agent lubrifiant est constitué par une huile et/ou une matière grasse dans laquelle se dissout la phase gazeuse, présentant à la fois une bonne qualité de pulvérisation, une adhérence suffisante à la paroi des récipients et une viscosité se situant dans une zone favorisant l'étalement régulier de la composition alimentaire.

2. Compositions alimentaires selon la revendication 1 caractérisées en ce que l'agent propulseur est constitué par du dioxyde de carbone.

3. Compositions alimentaires selon la revendication 1 ou la revendication 2 caractérisées en ce que l'agent de lubrification est une huile et/ou une graisse dont la viscosité se situe dans une plage assurant une bonne tenue sur les ustensiles ou les moules de cuisson.

4. Compositions pour le graissage des machines de traitement agro-alimentaires selon l'une des revendications 1 à 3 caractérisées en ce que l'agent de lubrification est une huile ou une graisse dont la viscosité à température ordinaire se situe dans une plage assurant une bonne adhésion sur les machines.

5. Compositions alimentaires selon l'une des revendications 1 à 3 caractérisées en ce que la pression du dioxyde de carbone à l'intérieur du conteneur est déterminée de façon que le dioxyde de carbone se dissolve au moins partiellement dans l'huile et/ou la matière grasse.

6. Compositions alimentaires selon l'une des revendications 1 à 4 caractérisées en ce que la viscosité de la fraction lipidique est d'au minimum de 20 mPa.s à 25° C.

7. Compositions alimentaires selon l'une des revendications 1 à 6 dans lesquelles la quantité de dioxyde de carbone dissoute dans la fraction lipidique est d'au minimum 3 % et de préférence de 5 à 10 %.

8. Compositions alimentaires selon l'une des revendications 1 à 7 caractérisées en ce que la phase liquide renferme en outre d'autres ingrédients et/ou additifs.

9. Compositions alimentaires selon l'une des revendications 1 à 8 caractérisées en ce que la phase liquide est constituée essentiellement par une huile végétale.

10. Compositions alimentaires selon l'une des revendications 1 à 9 caractérisées en ce que la phase liquide contient comme autres ingrédients et/ou additifs, des'agents émulsionnants, des cires, des agents anti-oxydants, des produits salins ou des agents tampon.

11. Procédé de réalisation des compositions alimentaires selon l'une des revendications 1 à 10 qui consiste à préparer au préalable le mélange lipidique constitué par une huile végétale additionnée éventuellement d'autres ingrédients et/ou additifs et à l'introduire dans un flacon monobloc pour aérosol, à soumettre le mélange après pose de la valve à une surpression modérée et passagère de dioxyde de carbone, de façon à faciliter la mise en solution puis ensuite à refermer le flacon.

12. Utilisation des compositions alimentaires selon l'une des revendications 1 à 10 pour assurer le démoulage des préparations de l'industrie de la boulangerie, de la pâtisserie ou de la biscuiterie.

13. Utilisation selon la revendication 12 dans laquelle on applique par pulvérisation d'une manière régulière et suffisamment importante, une pellicule de la composition sur la face des moules, récipients ou ustensiles en contact avec la préparation alimentaire.

14. Utilisation des compositions alimentaires selon la revendication 12 pour la lubrification des plaques de cuisson.

15. Utilisation des compositions alimentaires selon la revendication 12 pour le démoulage de produits de longue conservation ou des produits de cuisson domestiques.

16. Utilisation des compositions alimentaires selon la revendication 12 pour la lubrification des machines de traitement agro-alimentaires.
